(19) Europäisches Patentamt
European Patent Office
Office européen des brevets

(11) **EP 3 132 456 B1**

(12) **FASCICULE DE BREVET EUROPEEN**

(45) Date de publication et mention de la délivrance du brevet:
**13.06.2018 Bulletin 2018/24**

(21) Numéro de dépôt: **15720363.9**

(22) Date de dépôt: **08.04.2015**

(51) Int Cl.:
*H01F 27/26* (2006.01)   *H01F 27/28* (2006.01)
*H01F 27/30* (2006.01)   *H02M 3/335* (2006.01)

(86) Numéro de dépôt international:
**PCT/FR2015/050910**

(87) Numéro de publication internationale:
**WO 2015/158982 (22.10.2015 Gazette 2015/42)**

(54) **TRANFORMATEUR PLANAIRE D'UN CONVERTISSEUR COURANT CONTINU-COURANT CONTINU A RESONANCE, ET CONVERTISSEUR CORRESPONDANT**

PLANARTRANSFORMATOR EINES GLEICHSTROM-RESONANZWANDLERS UND ENTSPRECHENDER WANDLER

PLANAR TRANSFORMER OF A RESONANCE DC/DC CONVERTER, AND CORRESPONDING CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.04.2014 FR 1453298**

(43) Date de publication de la demande:
**22.02.2017 Bulletin 2017/08**

(73) Titulaire: **Valeo Equipements Electriques Moteur 94046 Créteil Cedex (FR)**

(72) Inventeurs:
• **DUBUS, Patrick**
  **78720 Saint Forget (FR)**
• **YANG, Gang**
  **92400 Courbevoie (FR)**

(74) Mandataire: **Duprez, Richard**
  **Valeo Equipements Électriques Moteur**
  **2, rue André Boulle**
  **94046 Creteil Cedex (FR)**

(56) Documents cités:
EP-A1- 0 254 464      DE-A1- 3 919 569
US-A1- 2004 036 454   US-A1- 2007 086 224

# Description

## DOMAINE TECHNIQUE DE L'INVENTION.

La présente invention concerne un transformateur planaire d'un convertisseur courant continu- courant continu à résonance, destiné notamment à la conversion de tension dans un équipement de puissance à plusieurs stockeurs d'un véhicule automobile

L'invention concerne également ce convertisseur à résonance.

## ARRIERE PLAN TECHNOLOGIQUE DE L'INVENTION.

Les convertisseurs courant continu- courant continu à résonance permettant de transformer un niveau de tension en un autre sont fréquemment mis en oeuvre dans les systèmes de conversion courant continu- courant continu à forte densité de puissance et à haut rendement.

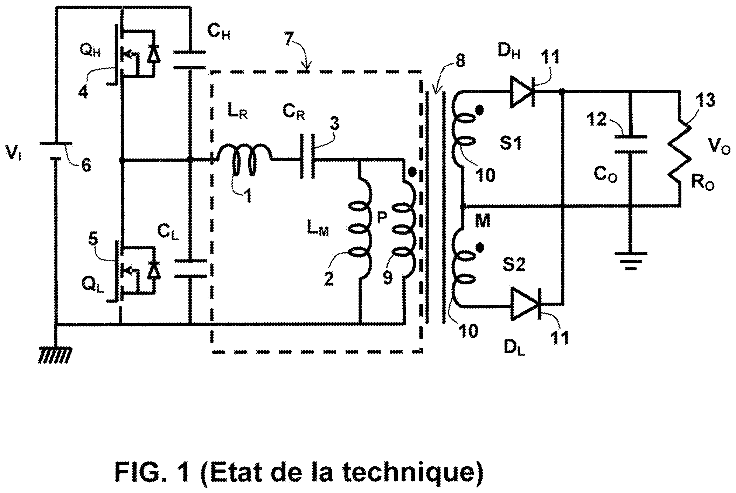

Une architecture de base simplifiée d'un convertisseur courant continu-courant continu (ou CC-CC selon l'acronyme correspondant) à résonance de type "LLC série" (c'est-à-dire comprenant deux inductances 1, 2 et un condensateur 3 en série) est représentée sur la **Figure 1.**

En entrée, deux transistors à effet de champ de puissance 4, 5 de type MOSFET sont connectés sur une source de courant continu 6 formant un demi-pont avec un premier transistor dit "hight-side" 4 connecté à la borne de potentiel de la source 6 et un second transistor dit "low-side" 5 connecté à la masse.

Le circuit résonant 7 comporte en série le condensateur 3 et une première inductance 1 déterminant la résonance, et une seconde inductance 2 d'un transformateur 8.

Généralement cette seconde inductance 2 est intégrée dans le transformateur 8 et constitue le primaire 9 du transformateur 8.

Le secondaire 10 du transformateur 8 présente un point milieu M relié à la masse. En sortie deux diodes 11 de redressement et un condensateur de filtrage 12 alimentent en courant continu une résistance de charge 13.

Les deux MOSFET de puissance 4, 5 sont commutés de manière complémentaire selon un rapport cyclique proche de 50%, en laissant un temps mort constant pour éviter un phénomène de conduction simultanée.

Ce convertisseur LLC connu fonctionne selon un mode de commutation à tension nulle de tous les semi-conducteurs 4,5, dans une large gamme de charges, avec des performances en CEM (compatibilité électro-magnétique) améliorées.

Dans les applications à l'automobile des convertisseurs de ce type, les tensions et les intensités mises en jeu sont souvent élevées, et les puissances électriques sont de l'ordre de plusieurs kilowatts.

Pour atteindre ces puissances élevées, on répartit la charge entre plusieurs convertisseurs à résonance élémentaires, ou cellules, connectés en parallèle en sortie.

Un tel convertisseur 300/12-18 V de 2,5 kW, fonctionnant à 500 kHz, est décrit par exemple dans l'article "Analysis of the load sharing characteristics of the series-parallel connected interleaved LLC resonant converter" par Gang Yang ; Dubus, P. et Sadarnac, D. (2012 13 th International Conférence on Optimization of Electrical and Electronic Equipment (OPTIM), 4-26 May 2012, Brasov, p.798 - 805 , IEEE).

En ce qui concerne le transformateur 8 en soi, dans l'industrie de l'automobile, on préfère des circuits magnétiques planaires qui ont l'avantage d'associer à une faible hauteur une grande surface de dissipation thermique.

Des circuits magnétiques en E conviennent très bien aux convertisseurs courant continu-courant continu de type à modulation de largeur d'impulsion (MLI) ou aux convertisseurs à résonance HT/BT de puissance inférieure à 300 W.

En ce qui concerne les convertisseurs HT/BT à résonance de forte puissance fonctionnant à haute fréquence, il est très difficile d'utiliser des circuits magnétiques planaires en E.

Les convertisseurs à résonance de forte puissance nécessitent généralement une très faible self primaire et un rapport de transformation élevé.

Par exemple, pour un convertisseur à résonance de 220-410 V/ 14 V de 1,25 kW, le rapport de transformation requis est de 16:1 et la self requise $L_M$ est d'environ 24 $\mu$H (beaucoup plus faible que celle des convertisseurs MLI qui est généralement de l'ordre du mH).

Dans le but d'atteindre une self primaire aussi faible, la seule méthode est de créer un entrefer important au niveau de la branche centrale du circuit magnétique planaire.

Compte tenu du fait que la hauteur d'un circuit magnétique planaire est limitée, intégrer un entrefer important peut poser des problèmes.

Dans la demande de brevet américaine US20030198067, il est proposé un circuit magnétique de très faible hauteur pour un convertisseur MLI courant continu- courant continu.

Ce circuit est constitué de deux circuits magnétiques en forme de E imbriqués perpendiculairement l'un dans l'autre.

La charge du convertisseur est répartie sur quatre convertisseurs MLI élémentaires dont les transformateurs respectifs sont constitués par des enroulements primaires et secondaires autour de chacune des quatre branches latérales du circuit magnétique.

Cette configuration permet de limiter la saturation du circuit magnétique et contribue à améliorer le rendement du transformateur.

Toutefois le rapport de transformation de chacun des quatre transformateurs élémentaires est le même et doit correspondre au rapport entre les tension d'entrée et de sortie.

Dans le cas d'un rapport de transformation élevé, le nombre de tours de chaque enroulement primaire est donc élevé et il en résulte que sa self est aussi élevée.

Cette configuration de transformateur ne convient donc pas à un convertisseur à résonance. Un transformateur planaire est divulgué dans la demande de brevet américaine US2004/0036454.

## DESCRIPTION GENERALE DE L'INVENTION.

En vue d'applications dans le domaine de l'automobile, le but de la présente invention est par conséquent un transformateur planaire dont les caractéristiques sont adaptées à une mise oeuvre dans un convertisseur à résonance.

L'invention a précisément pour objet un transformateur planaire du type de ceux comprenant:

- un circuit magnétique présentant un nombre prédéterminé au moins égal à quatre de branches latérales reliées chacune à chaque extrémité à une branche centrale par un premier et un second ponts magnétiques;
- au moins un enroulement primaire;
- au moins un enroulement secondaire agencé autour de chacune des branches latérales du circuit magnétique.

Conformément à l'invention, l'enroulement primaire du transformateur planaire est agencé autour de la branche centrale et une pluralité d'exemplaires des premier et second ponts magnétiques forment respectivement un X dans des plans perpendiculaires aux parties extrémales de la branche centrale.

Selon une caractéristique particulière, une pluralité d'entrefers sont disposés dans les branches latérales et/ ou la branche centrale en fonction d'une inductance primaire prédéterminée.

Selon une autre caractéristique particulière, l'enroulement primaire est un bobinage plan s'étendant sensiblement perpendiculairement à la branche centrale du circuit magnétique.

Selon encore une autre caractéristique particulière, le bobinage est constitué de préférence de fil de Litz.

Selon une forme de réalisation particulière, ce transformateur planaire comporte deux exemplaires de l'enroulement secondaire agencés autour de chacune des branches latérales du circuit magnétique de part et d'autre de l'enroulement primaire, et reliés en série.

On tire bénéfice du fait que l'enroulement secondaire est séparé de l'enroulement primaire par un film d'un matériau de faible perméabilité magnétique.

Selon une forme de réalisation particulière, l'enroulement secondaire est formé de feuillard de cuivre.

Selon une autre caractéristique particulière, le transformateur planaire comprend en outre un mandrin de maintien de l'enroulement primaire et de l'enroulement secondaire agencé sur la branche centrale du circuit magnétique.

Selon encore une autre caractéristique particulière, le transformateur planaire comporte une première section de la branche centrale qui est égale à une somme de secondes sections des branches latérales du circuit magnétique.

Selon encore une autre caractéristique particulière, un premier nombre de tours N1 de l'enroulement primaire, un second nombre de tours N2 de l'enroulement secondaire et un rapport de transformation r sont liés par la relation: $nN1/N2 = r$

où n est le nombre prédéterminé des branches latérales du circuit magnétique.

Selon encore une autre caractéristique particulière, deux exemplaires consécutifs de ces premier et second ponts magnétiques sont respectivement perpendiculaires.

Selon une autre aspect, l'invention concerne également un convertisseur CC-CC à résonance du type de ceux comportant plusieurs convertisseurs élémentaires CC-CC à résonance identiques connectés en parallèle en sortie. Conformément à l'invention, le convertisseur CC-CC à résonance comprend un transformateur planaire tel que décrit brièvement ci-dessus.

Selon une caractéristique particulière, les convertisseurs CC-CC élémentaires sont associés à des moyens de découpage d'une tension d'entrée en commun alimentant l'enroulement primaire du transformateur planaire.

Ces convertisseurs élémentaires sont de préférence de type LLC et ont en commun un condensateur, une inductance de résonance et l'enroulement primaire du transformateur planaire en série.

Selon une caractéristique particulière, des moyens de redressement de chacun des convertisseurs élémentaires sont connectés à l'enroulement secondaire. De préférence, chacun de ces moyens de redressement est un redressement double alternance constitué par deux diodes.

Selon encore une autre caractéristique, la branche centrale du transformateur planaire et ses branches latérales comportent chacune un exemplaire des entrefers d'une épaisseur sensiblement égale à 0,5 mm pour une fréquence de fonctionnement comprise entre 100 kHz et 1 MHz.

Ces quelques spécifications essentielles auront rendu évidents pour l'homme de métier les avantages apportés par le transformateur planaire selon l'invention, ainsi que par le convertisseur CC-CC à résonance comprenant un tel transformateur planaire, par rapport à l'état de la technique antérieur.

Les spécifications détaillées de l'invention sont données dans la description qui suit en liaison avec les dessins ci-annexés.

Il est à noter que ces dessins n'ont d'autre but que d'illustrer le texte de la description et ne constituent en aucune sorte une limitation de la portée de l'invention.

## BREVE DESCRIPTION DES DESSINS.

La **Figure 1** représente schématiquement un convertisseur CC-CC à résonance connu de l'état de la technique.

La **Figure 2** est une vue en perspective d'un transformateur planaire selon l'invention.

Les **Figures 3a et 3b** sont respectivement une vue en coupe schématique et une vue de dessus du transformateur planaire selon l'invention.

La **Figure 4** représente schématiquement un convertisseur CC- CC à résonance comprenant le transformateur planaire selon l'invention.

## DESCRIPTION DES MODES DE REALISATION PREFERES DE L'INVENTION.

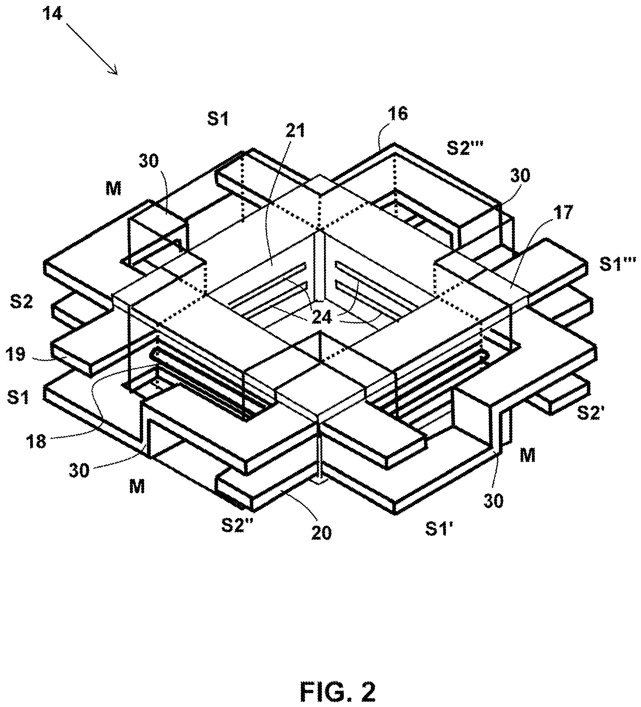

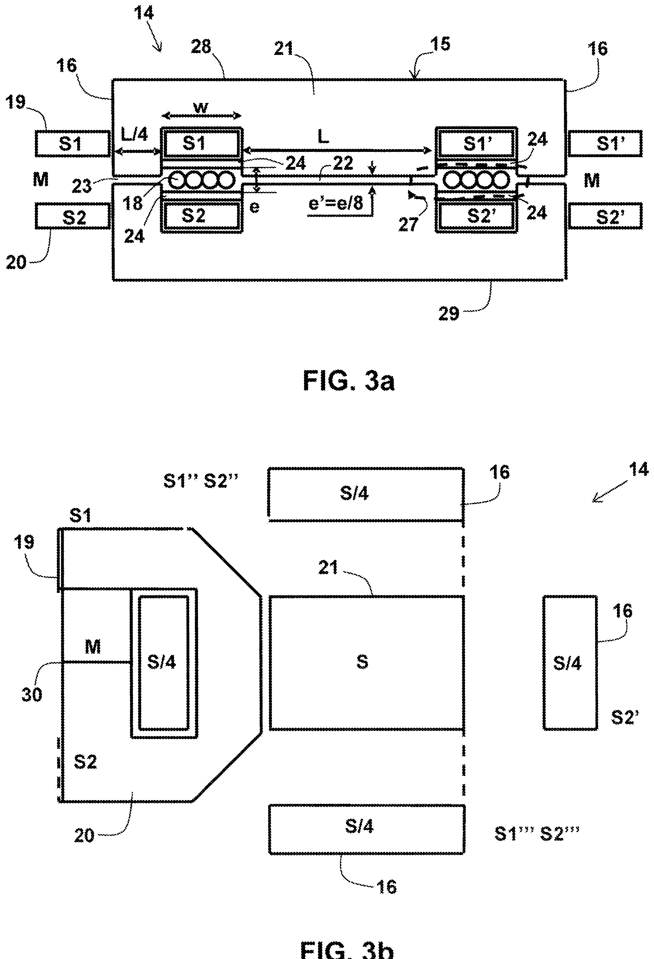

Dans le but de pallier les inconvénients des convertisseurs CC-CC à résonance basés sur le schéma électrique de la **Figure 1** et mettant en oeuvre des transformateurs comportant un circuit magnétique en forme de E ou de U, l'entité inventive a développé le transformateur planaire montré sur les **Figures 2, 3a et 3b** en vue d'une application dans un convertisseur CC-CC abaisseur 220-410 V/14 V de 1,25 kW destiné à des véhicules électriques ou hybrides.

Le transformateur planaire 14 selon l'invention comprend:

- un circuit magnétique 15 avec quatre branches latérales 16 formant en vue de dessus un X;
- un mandrin 17 de maintien des enroulements 18, 19, 20 agencé sur la branche centrale 21 du circuit magnétique 15;
- des entrefers 22, 23;
- un enroulement primaire 18 en fil de Litz;
- des enroulements secondaires 19, 20 en feuillard de cuivre;
- un film 24 en matériau de faible perméabilité magnétique entre l'enroulement primaire 18 et les enroulements secondaires 19, 20.

L'enroulement primaire 18 est bobiné sur la branche centrale 21 et les enroulements secondaires 19, 20 sont enroulés autour des quatre branches latérales 16.

Chaque branche latérale 16 est bobinée avec un tour S1, S1', S1", S1'" pour un premier enroulement secondaire 19 et avec un autre tour S2, S2', S2",S2'" pour un second enroulement secondaire 20.

Tous les enroulements secondaires 19, 20 sont mis en parallèle avant ou après des diodes de redressement 25, 26.

La structure de ce transformateur planaire 14 permet d'augmenter le nombre d'enroulements secondaire 19, 20 mis en parallèle, et il est possible de gérer des courants de sortie importants.

En ne bobinant pas à la fois les enroulements primaire 18 et secondaires 19, 20 sur la branche centrale 21 du circuit magnétique 15 comme dans les transformateurs en E classiques, grâce à la structure particulière du transformateur planaire 14 selon l'invention, on réalise intrinsèquement un rapport de transformation de 1/4.

De cette façon, pour réaliser un rapport de tension de 1/N, un enroulement primaire 18 de seulement N/4 tours est nécessaire.

La perte dans le cuivre de l'enroulement primaire 18 est de ce fait largement diminuée et ce transformateur convient parfaitement aux applications HT/BT de forte puissance.

Le transformateur 14 utilise N/4 tours seulement pour réaliser la même inductance primaire qu'un transformateur conventionnel comportant un entrefer d'épaisseur e, de la sorte l'épaisseur e' de l'entrefer 22 du transformateur 14 peut être abaissée à e/4.

L'épaisseur e' de cet entrefer 22 est alternativement abaissé à e/8 si des entrefers 23 de même épaisseur sont répartis dans les branches latérales 16.

Ainsi, le problème des entrefers d'épaisseur importante dans les transformateurs conventionnels des convertisseurs à résonance LLC avec des circuits magnétiques en E ou en U est résolu.

Cette structure du transformateur 14 permet de choisir un entrefer 22, 23 d'épaisseur limitée afin d'atteindre la faible self $L_M$ de l'enroulement primaire 18 requise.

Un entrefer 22, 23 de faible épaisseur entraîne une diminution du flux de fuite 27 dans les enroulements 18, 19, 20, d'où résulte une réduction des pertes par courants de Foucault.

A la différence des circuits magnétiques en U dans lesquels l'inductance de fuite est réalisée par un réglage d'un couplage entre les enroulements primaire 18 et secondaires 19, 20 en modifiant une largeur d'une fenêtre, un film 24 d'un matériau de faible perméabilité magnétique, de même largueur w que la fenêtre du circuit magnétique 15 et couvrant l'enroulement primaire 18, est inséré dans ce but.

Ce film 24 permet de guider le flux de fuite 27 et de réduire les perturbations électromagnétiques importantes dans les transformateurs conventionnels avec des circuits magnétiques en U.

De plus, l'inductance de résonance 1 peut être intégrée dans le transformateur planaire 14 selon l'invention en tant qu'inductance de fuite en choisissant soigneusement l'épaisseur et la perméabilité de ce film 24.

De la sorte, un transformateur planaire 14 de convertisseur LLC à résonance compact, à haut rendement et à faible perte est réalisé.

Comme le montre bien la **Figure 3b,** le circuit magnétique 15 du transformateur 14 comprend une branche centrale 21 ayant une première section S et quatre branches latérales 16 ayant une seconde section S/4.

Le transformateur 14 est dit "planaire", car le circuit magnétique 15 présente une hauteur beaucoup moins importante que sa largeur.

Chaque branche latérale 16 fait un angle de 90° avec la branche latérale 16 adjacente, donnant à l'ensemble vu de dessus une forme similaire à la lettre majuscule X.

Grâce à la grande étendue du circuit magnétique 15 par rapport à sa hauteur, celui-ci offre une grande surface de contact facilitant une dissipation thermique.

Ses faces supérieure 28 et inférieure 29 peuvent être facilement équipées d'une plaque de cuivre pour obtenir un meilleur refroidissement que dans le cas d'un circuit magnétique en E ou en U conventionnel.

En prenant en considération les fréquences de fonctionnement typiques des convertisseurs à résonance (100 kHz - 1 MHz), le circuit magnétique 15 est de préférence constitué de ferrite avec une perméabilité magnétique élevée.

La vue en coupe de **Figure 3a** montre bien que le transformateur planaire 14 est similaire à un transformateur avec un circuit magnétique en forme de E, exception faite que la largeur L de la branche centrale 21 est égale à quatre fois la largeur L/4 des branches latérales 16 (au lieu de deux fois dans les circuits magnétiques en E classiques).

Comme cela a déjà été indiqué, la branche centrale 21 et chaque branche latérale 16 comprennent un entrefer 22, 23 d'une épaisseur e'=e/8 par rapport à l'entrefer d'un transformateur conventionnel.

Sur chaque branche latérale 16 sont bobinés un tour S1, S1', S1", S1''' du premier enroulement secondaire 19 et un tour S2, S2', S2", S2''' du second enroulement secondaire 20.

Un point milieu électrique M est créé entre les deux enroulements secondaires 19, 20 qui s'étendent de part et d'autre de l'enroulement primaire 18.

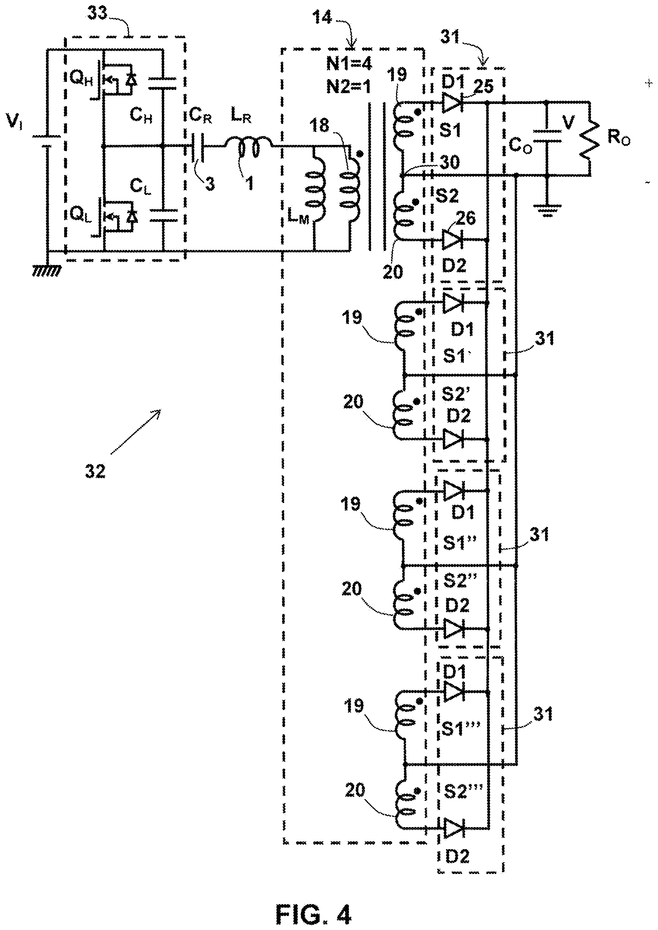

Cette disposition permet de connecter aux enroulements secondaires 19, 20 des moyens de redressement double alternance 31 ne comprenant que deux diodes 25, 26 comme le montre bien le schéma de principe du convertisseur CC-CC à résonance 32 selon l'invention de la **Figure 4.**

Si l'on compare la **Figure 4** à la **Figure 1,** il est clair qu'un transformateur conventionnel à point milieu comporte un enroulement primaire 2, 9 et deux enroulements secondaires 10.

Le transformateur 14 selon l'invention comporte un enroulement primaire 18 et huit enroulements secondaires 19, 20.

Dans un convertisseur à résonance HT/BT de type LLC, le courant à la sortie du convertisseur est très élevé.

Typiquement pour un convertisseur CC-CC à résonance abaisseur 300 V/ 12 V de 1,25 kW, les enroulements secondaires fournissent un courant de sortie ayant une intensité efficace de plus de 100 A et il est très difficile de fournir cette intensité tout en minimisant les pertes résistives.

Avec huit enroulements secondaires 19, 20, le courant de sortie est réparti dans chaque enroulement secondaire 19, 20 et réduit à un quart.

Dans ces conditions, le transformateur 14 est capable de supporter un courant plus élevé sans pertes résistives trop importantes, puisque les pertes résistives sont proportionnelles au carré de l'intensité efficace par la résistance.

Pour des feuillards identiques, les pertes résistives sont réduites de 75% par comparaison à un transformateur en E conventionnel.

Un autre avantage de cette méthode de bobinage est que le flux secondaire est réparti dans les quatre branches latérales 19, 20. Grâce à l'agencement des enroulements secondaires 19, 20 en X, un rapport de transformation secondaire/ primaire intrinsèque de 1/4 est réalisé.

Par exemple, pour obtenir un rapport de transformation de 16:1, un enroulement primaire 18 de seulement quatre tours est nécessaire au lieu d'un enroulement primaire 18 de seize tours.

La résistance de l'enroulement primaire 18 est ainsi réduite, ce qui conduit à une diminution supplémentaire des pertes résistives du transformateur 14 de 75%.

En ce qui concerne les entrefers 22, 23, l'entrefer 22 de la branche centrale 21 et tous les entrefers 23 des branches latérales 16 ont la même épaisseur e'.

Puisque le nombre de tours N1 de l'enroulement primaire 18 est divisé par quatre dans cette structure, pour garder une densité de flux uniforme dans le circuit magnétique 15, la première section de la branche centrale 21 doit être quatre fois plus grande que la seconde section des branches latérales 16.

En effet, selon la définition de la self propre $L_M$ de l'enroulement primaire 18:

$$L_M = N1^2 \mu_0 S/e$$

où S est l'aire de chaque spire, e la longueur de l'enroulement primaire 18 ou de l'entrefer initial et $\mu_0$ la perméabilité magnétique du vide.

Avec un nombre de tours N1 dans l'enroulement primaire 18 réduit à 1/4, $N1^2$ est réduit à 1/16 et S est augmentée quatre fois.

Pour garder une valeur constante de la self propre $L_M$, l'entrefer 22 doit donc être réduit de 75% et sa valeur optimale est e'=e/4.

Si les entrefers 22, 23 sont répartis entre la branche centrale 21 et les branches latérales 16, des entrefers 22, 23 d'une épaisseur e'=e/8 sont suffisants.

On doit noter qu'il est possible de ne retenir qu'un seul entrefer 22 dans la branche centrale 21 avec une épaisseur e'=e/4 pour obtenir une valeur correcte de la self propre $L_M$.

Mais dans ce cas, les courants de Foucault sont plus importants dans l'enroulement primaire 18.

L'entité inventive a opté pour une épaisseur e' sensiblement égale à 0.5 mm dans son convertisseur CC-CC de 1,25 kW à comparer à une épaisseur e de 4 mm dans les transformateurs en E ou à une épaisseur e de 2 mm dans des transformateurs en U.

Dans le transformateur planaire 14 conçu par l'entité inventive, le flux de fuite 27 est diminué et les pertes par courants de Foucault sont drastiquement réduites.

En ce qui concerne le film 24 de matériau de faible perméabilité magnétique relative $\mu_r$, ce film présente une épaisseur comprise entre 0,2 mm et 2 mm (selon le flux de fuite 27 produit et l'inductance de résonance $L_R$ à obtenir).

La perméabilité magnétique relative $\mu_r$ de ce film 24 est comprise entre 10 et 30. Il est réalisé en un composite ferrite- polymère ou tout autre matériau approprié de faible $\mu_r$,

Ce film 24 possède deux fonctions.

Premièrement, du fait que les enroulements primaire 18 et secondaires 19, 20 sont bobinés sur deux branches différentes 16, 21 du circuit magnétique 15, le flux magnétique produit par l'enroulement primaire 18 ne peut pas être complètement capturé par les enroulements secondaires 19, 20.

Sans ce film 24, le flux de fuite 27 passerait entre les enroulements primaire 18 et secondaires 19, 20, et même se répandrait en dehors du circuit magnétique 15 en produisant de fortes perturbations électromagnétiques.

L'intégration de ce film 24 permet donc de guider le flux de fuite 27 dans ce film 24 et de réduire les perturbations électromagnétiques pour améliorer la CEM.

Deuxièmement, dans la mesure où ce film 24 crée un chemin pour guider le flux de fuite 27, la réluctance de ce chemin peut être contrôlée par les propriétés magnétiques du matériau du film 24.

En choisissant un matériau de perméabilité magnétique relative $\mu_r$ déterminée et en faisant varier l'épaisseur de ce film, il est possible d'obtenir une inductance de fuite égale à l'inductance de résonance.

Dans ce cas, toutes les inductance $L_R$, $L_M$ sont intégrées dans le transformateur 14 et aucun autre composant inductif additionnel n'est nécessaire.

L'inductance de fuite est approximativement donnée par l'équation suivante:

$$L = 2N^2\mu_r\mu_0.St.l/w$$

où:

- St est l'épaisseur du film 24

- l la largeur du film 24, c'est-à-dire l'épaisseur des branches 16, 21 du circuit magnétique 15
- w la largeur de la fenêtre du circuit magnétique 15

Mais, dans certains cas, il peut être difficile d'intégrer toute l'inductance de résonance $L_R$ comme une inductance de fuite dans le transformateur 14 (difficulté pour atteindre une inductance de résonance élevée). Il est alors possible d'intégrer partiellement l'inductance de résonance $L_R$ dans le transformateur 14 et d'apporter la self manquante par un composant inductif indépendant.

Comme il va de soi, l'invention ne se limite pas aux seuls modes de réalisation préférentiels décrits ci-dessus,

Notamment, un transformateur planaire 14 à quatre branches latérales 16, tel que décrit ci-dessus, n'est pas la seule implémentation possible du concept de transformateur planaire 14 selon l'invention.

Le même concept peut être utilisé pour un transformateur planaire 14 avec un nombre de branches latérales 16 supérieur à quatre, dans la mesure où un film 24 de matériau de faible perméabilité magnétique relative $\mu_r$ est mis en oeuvre pour guider le flux de fuite 27 et obtenir l'inductance de résonance $L_R$ requise.

Par exemple, un rapport de transformation de 15:1 peut être réalisé par un transformateur planaire 14 selon l'invention présentant cinq branches latérales 16 avec trois tours dans l'enroulement primaire 18.

Une utilisation de ce transformateur 14 dans un convertisseur à résonance 32 de type LLC n'est pas non plus la seule application possible.

Dans tous les cas où il est nécessaire de créer et d'intégrer une inductance de fuite dans un transformateur 14 pour correspondre à la fréquence de fonctionnement des moyens de découpage 33 de la tension d'entrée d'un convertisseur 32, la structure décrite ci-dessus est très intéressante.

L'invention embrasse toutes les variantes possibles de réalisation dans la mesure où ces variantes restent dans le cadre défini par les revendications ci-après.

## Revendications

1. Transformateur planaire (14) du type de ceux comprenant:

   - un circuit magnétique (15) comprenant quatre branches latérales (16) reliées chacune à chaque extrémité à une branche centrale (21) par un premier et un second ponts magnétiques (28, 29);
   - au moins un enroulement primaire (18);
   - au moins un enroulement secondaire (19, 20) agencé autour de chacune desdites branches latérales (16); ledit enroulement primaire (18) étant agencé autour de ladite branche centrale (21) et **caractérisé en ce que** une pluralité d'exemplaires desdits premier et second ponts magnétiques (28, 29) forment respectivement un X dans des plans perpendiculaires aux parties extrémales de ladite branche centrale (21).

2. Transformateur planaire (14) selon la revendication 1, **caractérisé en ce qu'**une pluralité d'entrefers (22, 23) sont disposés dans lesdites branches latérales (16) et/ ou ladite branche centrale (21) et l'épaisseur d'entrefers est choisie en fonction d'une inductance primaire prédéterminée ($L_M$).

3. Transformateur planaire (14) selon l'une quelconque des revendications 1 ou 2 précédentes, **caractérisé en ce que** ledit enroulement primaire (18) est un bobinage plan s'étendant sensiblement perpendiculairement à ladite branche centrale (21).

4. Transformateur planaire (14) selon la revendication 3, **caractérisé en ce que** ledit bobinage (18) est constitué de fil de Litz.

5. Transformateur planaire (14) selon l'une quelconque des revendications 1 à 4 précédentes, **caractérisé en ce qu'**il comporte deux exemplaires (19, 20) dudit enroulement secondaire agencés autour de chacune desdites branches latérales (16) de part et d'autre dudit enroulement primaire (18), et reliés en série.

6. Transformateur planaire selon l'une quelconque des revendications 1 ou 5 précédentes, **caractérisé en ce que** ledit enroulement secondaire (19, 20) est séparé dudit enroulement primaire (18) par un film (24) d'un matériau de faible perméabilité magnétique.

7. Transformateur planaire (14) selon l'une quelconque des revendications 1 à 6 précédentes, **caractérisé en ce que** ledit enroulement secondaire (19, 20) est formé de feuillard de cuivre.

8. Transformateur planaire (14) selon l'une quelconque des revendications 1 à 7 précédentes, **caractérisé en ce qu'**il comprend en outre un mandrin de maintien (17) dudit enroulement primaire (18) et dudit enroulement secondaire (19, 20) agencé sur ladite branche centrale (21).

9. Transformateur planaire (14) selon l'une quelconque des revendications 1 à 8 précédentes, **caractérisé en ce qu'**une première section de ladite branche centrale (21) est égale à une somme de secondes sections desdites branches latérales (16).

10. Transformateur planaire (14) selon l'une quelconque des revendications 1 à 9 précédentes, **caractérisé en ce qu'**un premier nombre de tours N1 dudit enroulement primaire (18), un second nombre de tours N2 dudit enroulement secondaire (19, 20) et un rapport de transformation r sont liés par la relation:

$$nN1/N2 = r$$

où n est ledit nombre prédéterminé desdites branches latérales.

11. Transformateur planaire (14) selon l'une quelconque des revendications 1 à 10 précédentes, **caractérisé en ce que** deux exemplaires consécutifs desdits premier et second ponts magnétiques (28, 29) sont respectivement perpendiculaires.

12. Convertisseur CC-CC à résonance (32) du type de ceux comportant plusieurs convertisseurs élémentaires CC-CC à résonance identiques (14, 31, 33) connectés en parallèle en sortie, **caractérisé en ce qu'**il comprend un transformateur planaire (14) selon l'une des revendications 1 à 11 précédentes.

13. Convertisseur CC-CC à résonance (32) selon la revendication 12, **caractérisé en ce que** lesdits convertisseurs CC-CC élémentaires (14, 31, 33) sont associés à des moyens de découpage (33) d'une tension d'entrée ($V_i$) en commun alimentant ledit enroulement primaire (18).

14. Convertisseur CC-CC à résonance (32) selon la revendication 13, **caractérisé en ce que** lesdits convertisseurs élémentaires (14, 31, 33) sont de type LLC ayant en commun un condensateur de résonance (3), une inductance de résonance (1) et ledit enroulement primaire (18) en série.

15. Convertisseur CC-CC à résonance (32) selon l'une quelconque des revendications 12 à 14 précédentes, **caractérisé en ce que** des moyens de redressement (31) compris dans chacun desdits convertisseurs élémentaires (14, 31, 33) sont connectés audit enroulement secondaire (19, 20).

16. Convertisseur CC-CC à résonance (32) selon la revendication 15, **caractérisé en ce que** chacun desdits moyens de redressement (31) est un redressement double alternance constitué par deux diodes (25, 26).

17. Convertisseur CC-CC à résonance (32) selon l'une quelconque des revendications 12 à 16 précédentes, **caractérisé en ce que**, dans ledit transformateur planaire (14), ladite branche centrale (21) et lesdites branches latérales (16) comportent chacune un exemplaire desdits entrefers (23, 24) d'une épaisseur (e') sensiblement égale à 0,5 mm pour une fréquence de fonctionnement comprise entre 100 kHz et 1 MHz.

**Patentansprüche**

1. Planartransformator (14) des Typs jener, die Folgendes umfassen:

   - einen magnetischen Kreis (15), umfassend vier seitliche Zweige (16), die jeweils an jedem Ende durch eine erste und eine zweite Magnetbrücken (28, 29) mit einem mittleren Zweig (21) verbunden sind;
   - mindestens eine Primärwicklung (18);
   - mindestens eine Sekundärwicklung (19, 20), die um jeden der seitlichen Zweige (16) herum angeordnet ist; wobei die Primärwicklung (18) um den mittleren Zweig (21) herum angeordnet ist, und **dadurch gekennzeichnet, dass** mehrere Exemplare der ersten und zweiten Magnetbrücke (28, 29) jeweils ein X in Ebenen bilden, die senkrecht zu den extremalen Abschnitten des mittleren Zweigs (21) verlaufen.

2. Planartransformator (14) nach Anspruch 1, **dadurch gekennzeichnet, dass** mehrere Luftspalte (22, 23) in den seitlichen Zweigen (16) und/oder dem mittleren Zweig (21) angeordnet sind und die Dicke von Luftspalten in Abhängigkeit von einer vorbestimmten Primärinduktivität ($L_M$) gewählt ist.

3. Planartransformator (14) nach einem der vorhergehenden Ansprüche 1 oder 2, **dadurch gekennzeichnet, dass** die Primärwicklung (18) eine ebene Wicklung ist, die sich im Wesentlichen senkrecht zu dem mittleren Zweig (21) erstreckt.

4. Planartransformator (14) nach Anspruch 3, **dadurch gekennzeichnet, dass** die Wicklung (18) aus Litzendraht gebildet ist.

5. Planartransformator (14) nach einem der vorhergehenden Ansprüche 1 bis 4, **dadurch gekennzeichnet, dass** er zwei Exemplare (19, 20) der Sekundärwicklung aufweist, die um jeden der seitlichen Zweige (16) herum beiderseits der Primärwicklung (18) angeordnet und in Reihe geschaltet sind.

6. Planartransformator nach einem der vorhergehenden Ansprüche 1 oder 5, **dadurch gekennzeichnet, dass** die Sekundärwicklung (19, 20) durch einen Film (24) aus einem Material geringer magnetischer Permeabilität von der Primärwicklung (18) getrennt ist.

7. Planartransformator (14) nach einem der vorhergehenden Ansprüche 1 bis 6, **dadurch gekennzeich-**

**net, dass** die Sekundärwicklung (19, 20) aus Kupferband gebildet ist.

8. Planartransformator (14) nach einem der vorhergehenden Ansprüche 1 bis 7, **dadurch gekennzeichnet, dass** er ferner einen Dorn zum Halten (17) der Primärwicklung (18) und der Sekundärwicklung (19, 20) umfasst, der auf dem mittleren Zweig (21) angeordnet ist.

9. Planartransformator (14) nach einem der vorhergehenden Ansprüche 1 bis 8, **dadurch gekennzeichnet, dass** ein erster Abschnitt des mittleren Zweigs (21) gleich einer Summe zweiter Abschnitte der seitlichen Zweige (16) ist.

10. Planartransformator (14) nach einem der vorhergehenden Ansprüche 1 bis 9, **dadurch gekennzeichnet, dass** eine erste Anzahl von Umdrehungen N1 der Primärwicklung (18), eine zweite Anzahl von Umdrehungen N2 der Sekundärwicklung (19, 20) und ein Transformationsverhältnis r durch die folgende Beziehung verbunden sind:

$$nN1/N2 = r$$

wobei n die vorbestimmte Anzahl der seitlichen Zweige ist.

11. Planartransformator (14) nach einem der vorhergehenden Ansprüche 1 bis 10, **dadurch gekennzeichnet, dass** zwei aufeinanderfolgende Exemplare der ersten und zweiten Magnetbrücke (28, 29) jeweils senkrecht sind.

12. DC-DC-Resonanzwandler (32) des Typs jener, die mehrere identische elementare DC-DC-Resonanzwandler (14, 31, 33) aufweisen, die zum Ausgang parallel geschaltet sind, **dadurch gekennzeichnet, dass** er einen Planartransformator (14) nach einem der vorhergehenden Ansprüche 1 bis 11 umfasst.

13. DC-DC-Resonanzwandler (32) nach Anspruch 12, **dadurch gekennzeichnet, dass** die elementaren DC-DC-Wandler (14, 31, 33) mit Mitteln zum Schalten (33) einer gemeinsamen Eingangsspannung ($V_i$) in Verbindung stehen, die die Primärwicklung (18) versorgt.

14. DC-DC-Resonanzwandler (32) nach Anspruch 13, **dadurch gekennzeichnet, dass** die elementaren Wandler (14, 31, 33) vom LLC-Typ sind, wobei sie einen Resonanzkondensator (3), eine Resonanzinduktivität (1) und die Primärwicklung (18) in Reihe gemeinsam haben.

**15.** DC-DC-Resonanzwandler (32) nach einem der vorhergehenden Ansprüche 12 bis 14, **dadurch gekennzeichnet, dass** Gleichrichtungsmittel (31), die in jedem der elementaren Wandler (14, 31, 33) enthalten sind, mit der Sekundärwicklung (19, 20) verbunden sind.

**16.** DC-DC-Resonanzwandler (32) nach Anspruch 15, **dadurch gekennzeichnet, dass** jedes der Gleichrichtungsmittel (31) eine Vollweg-Gleichrichtung ist, die von zwei Dioden (25, 26) gebildet wird.

**17.** DC-DC-Resonanzwandler (32) nach einem der vorhergehenden Ansprüche 12 bis 16, **dadurch gekennzeichnet, dass** der Planartransformator (14), der mittlere Zweig (21) und die seitlichen Zweige (16) jeweils ein Exemplar der Luftspalte (23, 24) einer Dicke (e'), die im Wesentlichen gleich 0,5 mm ist, für eine Betriebsfrequenz zwischen 100 kHz und 1 MHz aufweisen.

## Claims

**1.** Planar transformer (14) of the type of those comprising:

- a magnetic circuit (15) comprising four lateral branches (16) each linked to each end of a central branch (21) by a first and a second magnetic bridges (28, 29);
- at least one primary winding (18);
- at least one secondary winding (19, 20) arranged around each of said lateral branches (16) ;

said primary winding (18) being arranged around said central branch (21) and **characterized in that** a plurality of copies of said first and second magnetic bridges (28, 29) respectively form an X in planes at right angles to the end parts of said central branch (21).

**2.** Planar transformer (14) according to Claim 1, **characterized in that** a plurality of air gaps (22, 23) are arranged in said lateral branches (16) and/or said central branch (21) and the air gap thickness is chosen as a function of a predetermined primary inductance ($L_M$).

**3.** Planar transformer (14) according to either one of the preceding Claims 1 or 2, **characterized in that** said primary winding (18) is a flat winding extending substantially at right angles to said central branch (21).

**4.** Planar transformer (14) according to Claim 3, **characterized in that** said winding (18) is composed of Litz wire.

**5.** Planar transformer (14) according to any one of the preceding Claims 1 to 4, **characterized in that** it comprises two copies (19, 20) of said secondary winding arranged around each of said lateral branches (16) on either side of said primary winding (18), and connected in series.

**6.** Planar transformer according to either one of the preceding Claims 1 or 5, **characterized in that** said secondary winding (19, 20) is separated from said primary winding (18) by a film (24) of a material of low magnetic permeability.

**7.** Planar transformer (14) according to any one of the preceding Claims 1 to 6, **characterized in that** said secondary winding (19, 20) is formed by copper leaf.

**8.** Planar transformer (14) according to any one of the preceding Claims 1 to 7, **characterized in that** it also comprises a mandrel (17) for securing said primary winding (18) and said secondary winding (19, 20) arranged on said central branch (21).

**9.** Planar transformer (14) according to any one of the preceding Claims 1 to 8, **characterized in that** a first section of said central branch (21) is equal to a sum of second sections of said lateral branches (16).

**10.** Planar transformer (14) according to any one of the preceding Claims 1 to 9, **characterized in that** a first number of turns N1 of said primary winding (18), and a second number of turns N2 of said secondary winding (19, 20) and a transformation ratio r are linked by the relationship:

$$nN1/N2 = r$$

in which n is said predetermined number of said lateral branches.

**11.** Planar transformer (14) according to any one of the preceding Claims 1 to 10, **characterized in that** two consecutive copies of said first and second magnetic bridges (28, 29) are respectively at right angles.

**12.** Resonance DC-DC converter (32) of the type of those comprising several identical unit resonance DC-DC converters (14, 31, 33) connected in parallel at the output, **characterized in that** it comprises a planar transformer (14) according to one of the preceding Claims 1 to 11.

**13.** Resonance DC-DC converter (32) according to Claim 12, **characterized in that** said unit DC-DC converters (14, 31, 33) are associated with means (33) for cutting a common input voltage ($V_i$) powering said primary winding (18).

14. Resonance DC-DC converter (32) according to Claim 13, **characterized in that** said unit converters (14, 31, 33) are of LLC type having in common a resonance capacitor (3), a resonance inductor (1) and said primary winding (18) in series.

15. Resonance DC-DC converter (32) according to any one of the preceding Claims 12 to 14, **characterized in that** rectifying means (31) included in each of said unit converters (14, 31, 33) are connected to said secondary winding (19, 20) .

16. Resonance DC-DC converter (32) according to Claim 15, **characterized in that** each of said rectifying means (31) is a dual alternation rectification composed of two diodes (25, 26).

17. Resonance DC-DC converter (32) according to any one of the preceding Claims 12 to 16, **characterized in that**, in said planar transformer (14), said central branch (21) and said lateral branches (16) each comprise a copy of said air gaps (23, 24) of a thickness (e') substantially equal to 0.5 mm for an operating frequency of between 100 kHz and 1 MHz.

FIG. 1 (Etat de la technique)

**FIG. 2**

**FIG. 3a**

**FIG. 3b**

**FIG. 4**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030198067 A

- US 20040036454 A

**Littérature non-brevet citée dans la description**

- Analysis of the load sharing characteristics of the series-parallel connected interleaved LLC resonant converter. **GANG YANG ; DUBUS, P. ; SADARNAC, D.** 13 th International Conférence on Optimization of Electrical and Electronic Equipment (OPTIM). IEEE, 2012, 798-805